# EUROPEAN PATENT APPLICATION

(11) **EP 2 428 874 A1**
(43) Date of publication of application: **14.03.2012**
(21) Application number: 10168548.5
(22) Date of filing: 06.07.2010
(51) Int. Cl.: G06F 3/033, G06F 3/03

(54) **Electronic pen communication**

(71) Applicant: Anoto AB, 227 22 Lund (SE)
(72) Inventor: Zander, Johan, 216 20, Malmö (SE)
(74) Representative: Grönlund, Tim Linus Wilhelm

(57) **Abstract**

An electronic pen (100) comprises a transceiver (152) for short-range point-to-point communication with external units and a memory (182) storing at least first communication link information for communication with a first external unit and second communication link information for communication with a second external unit. The first and second communication link information comprises information necessary for establishing a short-range point-to-point communication link with a specific first and a specific second external unit, respectively. The electronic pen (100) further comprises a controller (172) for controlling transmission of information from the electronic pen (100), said controller (172) being arranged to determine an order of using the first and second communication link information and to request establishing communication with an external unit in range of said transceiver (152) using the first and second communication link information in the determined order.

## Description

### Field of the Invention

The invention relates to an electronic pen and a method in an electronic pen for establishing short-range point-to-point communication between the electronic pen and an external unit.

### Background Art

Electronic pens can be used for generation of information that electronically represents handwritten entries on a product surface. One type of electronic pen operates by capturing images of a position code on the product surface. Based upon the images, the pen is capable of electronically recording a sequence of positions (a pen stroke) that corresponds to the pen motion on the product surface. The recorded positions can then be transferred to an external unit for further processing by an application running on the external unit.

WO 2006/049573 discloses an electronic pen which selectively processes recorded positions in an online process and an offline process. The pen activates the online process when it records positions which are part of an online segment of the position code. Hence, the online process is triggered if the electronic pen is used on a specific surface provided with a position code from the online segment. In the online process, the electronic pen provides recorded positions, sequentially and in near real time, on a communications interface of the pen. Also, functional areas, called "action areas", are associated with specific positions. The detection of a position within an action area may identify an external unit which the pen is to communicate with.

The communication between the electronic pen and an external unit may be encrypted. This would prevent eavesdropping on the communication by a third party. However, establishing an encrypted communication requires a set-up procedure for enabling the communication. Hence, the electronic pen may not securely communicate with an external unit without a set-up procedure being at least manually assisted.

The user needs to ensure that the electronic pen is set up to communicate with the desired external unit. This may require user interaction for selecting the desired external unit by means of reading positions of an appropriate action area. Hence, it would be desired to arrange for communication between an electronic pen and external units in a way to minimize the requirements on user interaction.

### Summary of the Invention

A first aspect of the invention is an electronic pen, comprising a sensing arrangement for recording a position of the electronic pen in relation to a substrate; a transceiver for short-range point-to-point communication with external units; a memory, having at least a first memory area for storing first communication link information for communication with a first external unit and a second memory area for storing second communication link information for communication with a second external unit; wherein said first and second communication link information comprises information necessary for establishing a short-range point-to-point communication link between the electronic pen and a specific first and a specific second external unit, respectively; and a controller for controlling transmission of information from the electronic pen, said controller being arranged to determine an order of using the first and second communication link information and to request establishing communication with an external unit in range of said transceiver using the first and second communication link information in the determined order.

The electronic pen stores information for communication with at least a first and a second specific external unit. This implies that the electronic pen is prepared for communication with these specific external units. Hence, no further user interaction is required for establishing communication with any of these specific external units. The controller of the electronic pen is further arranged to establish communication with one of the external units in accordance with a determined order for requesting establishment of communication. This implies that the electronic pen may establish communication with an external unit in range of the transceiver of the electronic pen without requiring any user interaction.

This configuration of the electronic pen is especially advantageous when the electronic pen is to be used for communicating with different external units in different locations. The user of the electronic pen may want the information recorded by the electronic pen to be transmitted to his personal computer when the user is in his office, whereas the user may want the recorded information to be transmitted to his mobile phone when the user is off the premises of the office. The electronic pen according to the invention may store first communication link information for establishing communication with the personal computer and second communication link information for establishing communication with the mobile phone. Since the electronic pen stores communication link information for establishing communication with specific external units, the electronic pen is also able to initiate a secure communication with the personal computer or the mobile phone.

A second aspect of the invention is a method in an electronic pen, said method comprising receiving a request to transmit information from the electronic pen to an external unit; determining an order of using a first communication link information for short-range point-to-point communication and a second communication link information for short-range point-to-point communication among information of at least two communication links stored in the electronic pen, wherein said first and second communication link information comprises information necessary for establishing a short-range point-to-point communication link between the electronic pen and a specific first and second external unit, respectively; retrieving said first communication link information for short-range point-to-point communication from a first memory area of the electronic pen according to the determined order; requesting establishment of a short-range point-to-point communication link with the first external unit using the first communication link information; detecting a failure of establishing a short-range point-to-point communication link with the first external unit; retrieving a second communication link information for short-range point-to-point communication from a second memory area of the electronic pen according to the determined order; and requesting establishment of a short-range point-to-point communication link with the second external unit using the second communication link information.

The electronic pen is arranged to determine an order in which the pen will try to establish communication link to specified external units. The electronic pen will communicate with the first external unit to which a communication link is successfully established. This implies that the electronic pen may communicate with the specific external unit which is within range of the transceiver of the electronic pen. There is no need for user interaction to prompt the electronic pen to switch communication to another external unit, when the external unit last communicated with is no longer within range of the transceiver.

The first and second communication link information may comprise information of a last time of communication between the electronic pen and the first and second external unit, respectively, and the controller of the electronic pen may be arranged to determine the order of using the first and second communication link information based on said information of the last time of connection.

This implies that the electronic pen will try to establish a communication link to the external unit which was last communicated with. Hence, if the user is no longer in range of the external unit, the request for establishing a communication link will fail and the electronic pen will try to establish a communication link to the next external unit in the determined order. The electronic pen will thereby be able to establish a communication link to an external unit presently in range of the transceiver of the electronic pen. The user will not need to take any active part in this procedure and the establishment of the communication link will occur seamlessly to the user.

However, if several external units are within range of the electronic pen, the pen may establish a communication link with another external unit than intended by the user. For example, if the user wants to transmit information to his personal computer, but the electronic pen last communicated with a mobile phone of the user and the user is still carrying his mobile phone, the electronic pen will establish a communication link with the mobile phone.

This may be avoided by setting a priority of the first and second communication link information. The controller of the electronic pen may determine the order of using the first and second communication link information based on the set priority.

Hence, instead of using the information of the last time of communication, the controller may use the priority of the communication link information. However, in such a situation, the controller will always first try to establish communication with a specific external unit. This implies that first request for establishing communication may more often fail compared to when the controller first tries to establish communication with the external unit last communicated with.

It may take some time for the controller to conclude that a communication link may not be established and to move on to request establishing communication with a second external unit. However, the time elapsing before communication is established need not be noticed by the user, even if several fails to establish communication with different external units occurs, because the request for establishing communication is merely done when communication between the electronic pen and the external unit is initiated. For instance, if the electronic pen is to continuously transmit information to an external unit as the information is recorded, the communication link is established and is then maintained during the recording and transmitting of information.

### Brief Description of the Drawings

The embodiments of the invention will now be described in more detail with reference to the accompanying schematic drawings.
Fig. 1 is a schematic view of a length-wise cross-section of an electronic pen.
Fig. 2 is an exploded perspective view of interior parts of the electronic pen.
Fig. 3 is a schematic view of an electronic pen communicating with an external unit.
Fig. 4 is a block diagram of a communication controller of the electronic pen.
Fig. 5 is a flow chart illustrating a process of handling recorded positions in the electronic pen.
Fig. 6 is a flow chart illustrating a process for handling a detection of a coordinate within an action area.
Fig. 7 is a flow chart illustrating a process for establishing a connection between an electronic pen and an external unit.
Fig. 8 is a flow chart illustrating a process for pushing a file from the electronic pen to the external unit.
Fig. 9 is a flow chart illustrating a process for sending information in real time from the electronic pen to the external unit.

### Detailed Description of a Preferred Embodiment

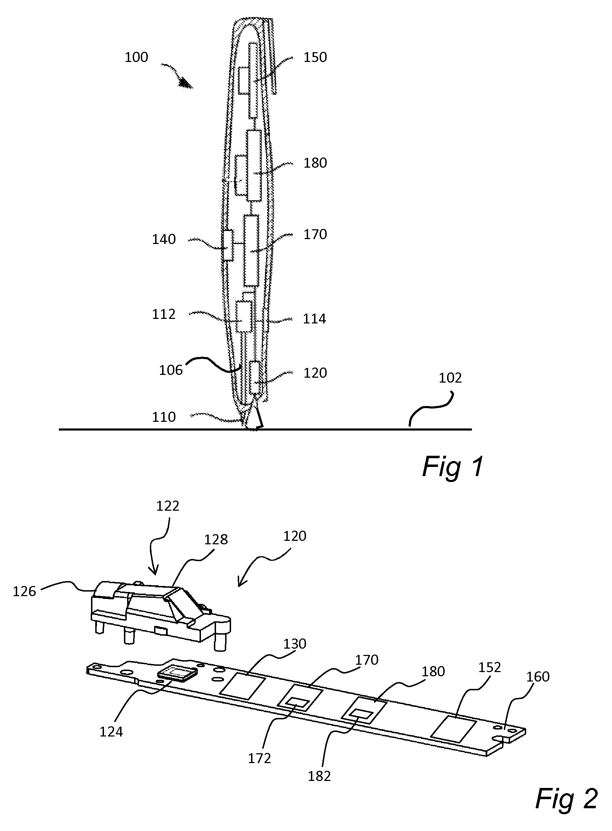

Referring now to Figs 1 and 2, a general description of an electronic pen 100 will be provided. The electronic pen 100 may comprise a pen-shaped shell or casing within which the components of the electronic pen are mounted. The electronic pen 100 may or may not further comprise a pen tip protruding from the shell for pointing or writing on a substrate 102.

The electronic pen 100 may comprise a writing implement 106 having a writing tip 110 forming the pen tip. The writing implement 106 may be movable between a retracted position completely inside the casing of the electronic pen 100 and an extended position, wherein the writing tip 110 of the writing implement 106 projects from the casing of the electronic pen 100. Alternatively, the writing implement 106 may be arranged in a fixed relation to the electronic pen 100, and the electronic pen 100 may comprise a cap covering the writing tip 110, which may be removed for unveiling the tip.

The writing implement 106 may be arranged to leave a pigment trace on the substrate 102 during writing. For instance, the writing implement 106 may be in the form of an ink cartridge for any kind of pen, such as a ballpoint pen, a rollerball pen, a fountain pen or a felt tip pen. The ink cartridge may be in the form of a pen refill, which may be substituted when the pen runs out of ink. Alternatively, the writing implement 106 is fixed and may be provided with additional writing material, if needed. Using this alternative, a graphite lead may be used for leaving the pigment trace. The writing implement 106 may thus realize a mechanical pencil.

According to another alternative, the writing implement 106 is arranged not to leave any trace on the substrate 102. In this regard, the writing implement 106 may be realized as a stylus having a tip for pointing at desired positions. Also, the electronic pen 100 may be provided with both an ink cartridge and a stylus, such that it is possible to switch between a mode where a pigment trace is made on the substrate 102 and a mode where no trace is made. In one embodiment, the ink cartridge and the stylus may be simultaneously mounted on the electronic pen 100 and be movable between extended and retracted positions. In another embodiment, the ink cartridge and the stylus are replaceable in the electronic pen 100.

Alternatively, the electronic pen 100 may have an annular flange forming a contact surface to be applied to the substrate 102 for pointing at desired positions. Hence, the electronic pen 100 need not have any tip at all.

The electronic pen 100 may comprise a pen down detector 112 for determining whether the tip 110 of the electronic pen 100 has been applied onto the substrate 102. Thus, the pen down detector 112 detects when a user puts down the electronic pen 100 on the substrate 102 for commencing input of data with the electronic pen 102.

The pen down detector 112 may be a force sensor. The force sensor may be arranged at the opposite end of the writing implement 106 to the tip 110. The writing implement 106 may be movable such that a force is applied to the force sensor when the tip 110 is pressed down on the substrate 102. Alternatively, detection that the pen 100 is applied to a substrate 102 may be accomplished by an image sensor 124 of the electronic pen 100 being able to acquire an image of a substrate in focus. As a further alternative, the electronic pen 100 may comprise a light source and a light detector at a front end of the pen. The light source may be arranged to transmit light pulses and upon detection by the light detector of reflected light from a substrate within a predetermined time frame, the pen 100 may be determined to be applied to the substrate 102. Any combinations of these techniques may also be used.

The electronic pen 100 may further comprise a sensing arrangement 120 for recording information in order to determine the position of the tip of the electronic pen on the substrate 102. The sensing arrangement 120 may start detecting the position of the electronic pen in response to a signal from the pen down detector 112 that the electronic pen 100 has been applied to a substrate 102.

The electronic pen 100 may also comprise a button 114, which may be pushed by the user to control the electronic pen 100. For instance, the button 114 may be pushed to activate the electronic pen 100.

There are a number of different ways of determining the position of the electronic pen. Hence, the sensing arrangement 120 of the electronic pen 100 may be implemented in several different ways.

According to one embodiment, the substrate 102 may be provided with a position code which may be read by the sensing arrangement 120 of the electronic pen 100. The read position code may be decoded for determining the position of the electronic pen 100.

There are different types of position codes. One type comprises cells or complex symbols, which are arranged side-by-side on the substrate and each of which codes a position and may also code an identifier of the substrate 102. Another type of position code has a window property, which means that each part area of a predetermined size, is unique within the position code and thus codes an unambiguous position in the position code. Each position may be coded by a plurality of simple symbols, like dots, and at least some of a plurality of symbols which are used for coding a first position also contribute to the coding of a second adjacent position. Examples of position codes of this latter type are found in e.g. US 6,570,104; US 6,663,008; and US 6,667,695. These position codes are suitable for recording an electronic representation of handwriting. Under other circumstances, e.g. when the electronic pen 100 is to be used for pointing at positions on the substrate 102 for triggering actions associated with the positions, the position code can be simpler and have lower position resolution. The position code may for instance code the same position or position identifier in a whole field on the substrate 102 if the specific position within the field is unimportant. In such case, the position code may e.g. be formed as a 2D bar code.

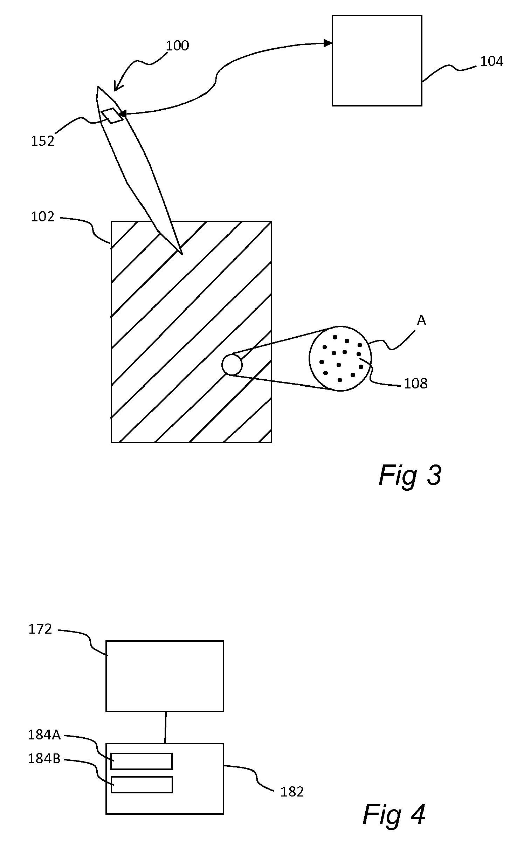

As schematically illustrated in the enlargement A of Fig. 3, the position code may form a position-coding pattern 108 on the substrate 102 that is detectable by an image sensor 124 of the electronic pen 100. The position code may thus have a characteristic that differs from the substrate 102. This characteristic of the position-coding pattern 108 may be optically detectable, by the position-coding pattern having different transmission, reflection or absorption characteristics within a certain wavelength or range of wavelengths than the substrate 102. The image sensor 124 is then arranged to acquire images based on optical characteristics. The position code may, however, be based on a characteristic other than an optical characteristic. In such a case, the image sensor 124 of the electronic pen 100 is of a type which can read the characteristic concerned. Examples of such characteristics are chemical, acoustic or electromagnetic marks. Capacitive or inductive marks may also be used.

For an optically readable position code, it is relatively simple to apply the position code onto different substrates, in particular to paper. The optically readable position code may, in one embodiment, have an increased or decreased absorption of infrared radiation compared to the substrate.

If the position-coding pattern 108 is optically detectable, the sensing arrangement 120 may comprise an optical system 122 for forming an image of the substrate 102 close to the writing tip 110 onto an optical image sensor 124, such as a charge coupled device (CCD) or complementary metal-oxide-semiconductor (CMOS) sensor, which is arranged to acquire a two-dimensional image. The optical system 122 may comprise a lens 126 for focussing the image onto the sensor surface. The optical system 122 may also comprise a light guide 128, which may include one or more mirrors for guiding the light to the sensor 124. Also, the optical system 122 may comprise a wavelength filter for filtering out unwanted wavelengths. The position-coding pattern may have especially strong reflective or absorptive characteristics for certain wavelengths. By only letting these wavelengths reach the sensor surface, the image quality is improved.

The electronic pen 100 may further comprise a light source (not shown). The light source may emit light towards the portion of the substrate 102 that is being imaged. Thus, the imaging conditions may be improved. The light source may further be arranged to emit light in a wavelength range, which the position-coding pattern 108 will interact with in a strong manner. For example, the light source may emit infrared light and the position-coding pattern 108 may be printed on the substrate 102 with a pigment that strongly absorbs infrared light. The optical system 122 may further have a filter that blocks wavelengths shorter than infrared light to further improve the quality of the image acquired by the sensor 124.

The sensing arrangement 120 in the electronic pen 100 may alternatively comprise a sensor, which is arranged to read another parameter than an optical parameter. For example, the sensing arrangement may comprise a spectrometer for detecting a pattern using a chemical parameter, e.g. the chemical composition of the substrate being varied in order to produce the position-coding pattern.

As another alternative, the sensing arrangement 120 may comprise a detection head in which a driving coil and a receiving coil are disposed. These coils interact with a scale in which a magnetic modulating section such as closed loop coils is disposed, e.g. in the form of a metal pattern on a resin substrate. The detection head is relatively moved with respect to the magnetic modulating section to modulate a magnetic flux generated by the driving coil. A primary varying magnetic flux which is generated when the driving coil is AC-driven is modulated by the scale, so that a magnetic pattern of a predetermined period is formed. The magnetic pattern is coupled with the receiving coil of the detection head. As a result, an induced voltage which is varied in accordance with movement of the scale appears in the receiving coil.

As a yet further alternative, the sensing arrangement 120 may comprise accelerometers in order to detect the movements of the electronic pen 100 relative a starting position. The sensing arrangement 120 may then further comprise a detector for determining the starting position, such as a barcode reader for reading a barcode in a predetermined position of the substrate 102.

The electronic pen 100 may be arranged to continuously record information for determining the position of the tip of the electronic pen 100 on the substrate 102 as long as the pen tip is applied to the substrate 102, as sensed by the pen down detector 112. An image sensor 124 of the electronic pen 100 may thus be arranged to acquire images with a set frame rate while the pen tip is applied to the substrate 102. In this regard, a sequence of positions may be recorded, which may form an electronic representation of handwriting on the substrate 102.

According to another alternative, the sensing arrangement 120 of the electronic pen 100 is arranged to record information for determining the position upon being triggered by a user. This may be suitable for recording positions, when the electronic pen 100 is to be used for pointing to specific positions on the substrate 102. The user may trigger the recording of information by e.g. pushing a button 114 on the electronic pen 100.

The electronic pen 100 may further comprise an analyzing unit 130, which is arranged to determine the position of the electronic pen 100 based on the information acquired by the sensing arrangement 120. The analyzing unit 130 may be integrated with the sensing arrangement 120 in order to directly determine the position of the electronic pen upon position data being acquired. For example, the analyzing unit 130 may be realized as a customer-specific integrated circuit adapted for the purpose (for example ASIC, application-specific integrated circuit), which may also hold the image sensor 124. As an alternative, the analyzing unit 130 may be arranged to receive the acquired position data, such as images, from the sensing arrangement 120. The analyzing unit 130 may then still be realized as a customer-specific integrated circuit, or of some form of programmable integrated circuit (for example PROM (Programmable Read-Only Memory), FPGA (Field-Programmable Gate Array)) or an ordinary processor running a special software program for determining the position based on the acquired position data.

Alternatively, the electronic pen 100 may be arranged to merely acquire the position data and transmit the position data to an external unit 104 for analysis. In such case, the analyzing unit would be arranged in an external unit 104. As a further alternative, the electronic pen 100 may be arranged to perform some preprocessing of the acquired position data and transmit the preprocessed position data to an external unit 104 for finally determining the position from the acquired position data.

The analyzing unit 130 may be arranged to analyze an image of a position-coding pattern 108 and decode the position coded by the portion of the position-coding pattern that is depicted in the image. The analyzing unit 130 would naturally have instructions that are dependent on the encoding scheme of the position-coding pattern 108 such that the decoding performed in the analyzing unit 130 is adapted to the specific position-coding pattern to be decoded. Examples of such decoding algorithms are provided in US 6,663,008 and US 6,667,695.

The electronic pen 100 may further comprise means for providing feedback to a user. Feedback may be provided in many different ways. For example, the electronic pen 100 may comprise a vibrator, which may cause the electronic pen to vibrate in order to e.g. signal to the user that a certain position associated with a function has been successfully detected or that the electronic pen 100 is not able to decode or read positions properly. As an alternative, the electronic pen 100 may comprise one or more light sources, such as LEDs, for providing information to the user. The LEDs may e.g. indicate when the electronic pen is switched on or when data is being transmitted to an external unit. As a further alternative, the electronic pen 100 may comprise a display 140. Thus, text or picture messages may be provided to the user regarding the handling of the electronic pen 100. As a yet further alternative, the electronic pen 100 may comprise a speaker (not shown) for providing audio messages to the user. Of course, the electronic pen 100 may comprise one or more of these feedback means in order to provide feedback in more than one way to the user. The electronic pen 100 may then be arranged to provide different forms of feedback through different means.

The electronic pen 100 further comprises a communication unit 150 for communicating with an external unit 104, as illustrated in Fig. 3. The electronic pen 100 may be arranged to communicate with the external unit 104 both through a wired connection and through a wireless connection.

The wired connection may e.g. be established by the electronic pen 100 comprising a connector for receiving a plug or for being introduced into a receptacle. The connector may be any kind of electrical connector, such as a USB connector. The wired connection may alternatively be established by the electronic pen 100 being placed in a specially designed cradle, which in turn may comprise a wire for connecting to the external unit 104. The electronic pen 100 may then comprise an interface for forming a connection with the cradle. The interface may be freely designed, since the cradle is specially designed for the electronic pen 100, and thus many alternative techniques may be feasible. For example, any kind of plug/socket connection may be used.

In order to provide communication through a wireless connection, the communication unit 150 of the electronic pen 100 may comprise a transceiver 152. The transceiver 152 may be adapted to send a signal which may be received by a receiver of the external unit 104 and receive signals transmitted from the external unit 104. The transceiver 152 may be arranged for short-range communication with the external unit 104. Hence, the transceiver 152 may send a signal having such signal strength and characteristics as to require a receiving unit to be in close vicinity in order to be able to detect the signal. This may imply that the external unit 104 may need to be within 100 meters of the electronic pen 100. In another embodiment, the external unit 104 may need to be within 10 meters of the electronic pen 100.

The transceiver 152 may be arranged to transmit and receive radio signals. In this regard, the transceiver 152 may comprise an antenna, which may be connected to the printed circuit board 160. In one embodiment, the transceiver 152 may comprise a chip antenna mounted on the printed circuit board 160. In another embodiment, the transceiver 152 may comprise an antenna and a generator connected to the antenna. The generator may be mounted on the printed circuit board 160 and may be arranged to generate a driving frequency controlling the transmission of the antenna.

The tranceiver 152 may be arranged to transmit a radio signal in a frequency suitable and dedicated to short-range communication. The transceiver 152 may typically use a frequency in the range of 300 MHz to 30 GHz. Suitably a frequency range is used so as not to interfere with other radio signals from other devices. The transceiver 152 may be arranged for communication according to any suitable communication protocol, such as Bluetooth.

The electronic pen 100 may be arranged to transmit a detected sequence of positions to the external unit 104 for further processing therein. However, the electronic pen 100 and the external unit 104 may alternatively or additionally communicate other kinds of information. For example, the electronic pen 100 may transmit images of the position-coding pattern 108 to the external unit 104, and the corresponding positions may be determined in the external unit 104 instead. Further, the electronic pen 100 may transmit function calls for initiating an operation in the external unit 104, which may e.g. be triggered by detection in the pen 100 of a position within an area associated with a certain function. The electronic pen 100 may also be arranged to transmit any other kind of information generated or stored in the electronic pen 100 to the external unit 104. Moreover, the external unit 104 may transmit information to the electronic pen 100, such as reactions to the detected positions, updates of software of the electronic pen 100 or specifications of associations between positions and functions.

The power supply for the electronic pen 100 may be obtained from a battery, which may be mounted inside the electronic pen. As an alternative, the power supply may be provided via a cable from an external power source.

The electronic pen 100 may further comprise a control unit 170 which may be connected to a memory block 180. The control unit 170 may be responsible for the different functions in the electronic pen 100. The control unit 170 may be implemented by a commercially available microprocessor such as a CPU (Central Processing Unit), by a DSP (Digital Signal Processor) or by some other programmable logical device, such as an FPGA or alternatively an ASIC (Application-Specific Integrated Circuit), discrete analog and digital components, or some combination of the above. The memory block 180 may comprise different types of memory, such as a working memory (e.g. a RAM, Random-Access Memory) and a program code and persistent storage memory (a non-volatile memory, e.g. a flash memory). Associated software is stored in the memory block 180 and is executed by the control unit 170 in order to provide a pen control system for the operation of the electronic pen 100.

The control unit 170 may be arranged to control the different parts of the electronic pen 100, such as the pen down detector 112, the sensing arrangement 120, such as the image sensor 124 and light source as exemplified above, the feedback means, and a communication unit 150 for communicating with an external unit 104. According to one embodiment, the control unit 170 may also be arranged to analyze the position data acquired by the sensing arrangement 120.

The control unit 170 of the electronic pen 100 may be implemented on a printed circuit board 160. The different parts of the electronic pen 100, such as the pen down detector 112, the sensing arrangement 120, the feedback means, and the communication unit 150 may be connected and/or mounted on the printed circuit board 160. The printed circuit board 160 may be arranged to extend in a longitudinal direction of the electronic pen 100, which enables the electronic pen 100 to be manufactured with a small diameter. The electronic pen 100 may also comprise a carrier, which may form a mounting unit for controlling the mounting of the parts of the electronic pen inside the casing of the pen. An example of such a carrier is provided in WO 05/057471.

The control unit 170 of the electronic pen 100 may comprise a communication controller 172 for controlling communication between the electronic pen and the external unit. The communication controller 172 may be connected to the transceiver 152 for controlling the signals to be transmitted by the transceiver 152. The communication controller 172 may be implemented as an ASIC arranged on the printed circuit board 160. Alternatively, the communication controller 172 may be implemented as a processing unit which is provided with a computer program for controlling the processing unit to act as the communication controller 172.

As a further alternative, the communication controller may be implemented as a process running on a CPU of the electronic pen 100, which CPU also implements the above-described control unit 170.

As schematically illustrated in Fig. 4, the communication controller 172 may communicate with a memory 182 on the printed circuit board 160. The memory may be a non-volatile memory, such as EPROM (erasable programmable read-only memory) or flash EEPROM (electrically-erasable programmable read-only memory). The memory 182 may store communication link information. The communication link information may provide information necessary to establish a communication link between the electronic pen 100 and an external unit 104 using the transceiver 152 of the electronic pen 100.

The memory 182 may store communication link information that provides specific information for establishing a connection with a specific external unit 104. The communication link information may comprise an address of the external unit 104 in the protocol used by the transceiver 152. The communication link information may also comprise a key or password associated with the receiver of the external unit 104.

For example, if the transceiver uses Bluetooth communication, the communication link information 184A-C may comprise a Bluetooth address and a link key.

The memory 182 may comprise communication link information for providing specific information for several external units 104. Hence, the memory 182 may comprise at least a first memory area 184A for storing first communication link information and a second memory area 184B storing second communication link information. The communication controller 172 is arranged to access the first and second memory area 184A, 184B in order to retrieve the first and second communication link information, respectively. When the communication controller 172 has retrieved communication link information from the memory 182, the communication controller 172 may use the communication link information in order to control the transceiver 152 to establish a communication link to the external unit 104.

The communication link information associated with a specific external unit may be acquired by the communication controller 172 establishing a communication link between the electronic pen 100 and the external unit 104 in a set-up procedure. This set-up procedure may require manual input, such as actively setting the external unit 104 in a set-up state or providing information about the electronic pen 100 to the external unit 104 through input means of the external unit 104. Alternatively, the set-up procedure may be entirely automatic by the electronic pen 100 and the external unit 104 exchanging communication link information. The communication controller 172 may be arranged to acquire communication link information associated with at least two different specific external units 104.

Once the communication link information is stored in the electronic pen 100, the communication controller 172 may use the communication link information for establishing a communication link to the external unit 104. This implies that the communication link may be established quickly, since the communication link information has already been stored in the electronic pen 100 and need not be gathered again. Further, there is no need of manual input for establishing the communication link between the electronic pen 100 and the external unit 104.

The communication controller 172 may be arranged to establish a communication link to an external unit 104 which is within range of the transceiver 152 upon request for transmission of data from the electronic pen 100. The communication controller 172 may try to establish a communication link using one of the first and second communication link information. If the communication controller 172 is not able to establish a communication link, the communication controller 172 may try to establish a communication link using the other of the first and second communication link information. The communication controller 172 may try to establish a communication link sequentially using all stored communication link information until a communication link may be established. Hence, as long as the electronic pen 100 is within range of the transceiver 152 to an external unit 104, for which communication link information has been stored, the communication controller 172 is able to establish a communication link to an external unit 104 without any user input.

The communication controller 172 may be arranged to determine an order, in which to use the first and second and any further communication link information for trying to establish a communication link to an external unit 104. In one embodiment, the communication link information may comprise information of a last time of communication between the electronic pen 100 and the external unit 104 associated with the communication link information. The communication controller 172 may use this information of last time of communication in order to determine the order of trying to establish a communication link. Hence, the communication controller 172 may be arranged to first try to establish a communication link to the external unit 104 with which the electronic pen 100 was last connected.

In another embodiment, the communication link information may comprise priority information. The communication controller 172 may use the priority information in order to determine the order of trying to establish a communication link. Hence, the communication controller 172 may be arranged to first try to establish a communication link to the external unit 104 having a highest priority. A user of the electronic pen 100 may be prompted to provide priority information during set-up procedure, when the communication link information associated with an external unit 104 is gathered.

In other embodiments, the communication controller 172 may use statistics of the usage of the communication link information for determining the order of using the communication link information. For instance, the usage of a specific communication link information may be highly dependent on the time of day. The user may mostly be using the electronic pen 100 with a specific computer at his office during daytime and with another specific computer at home in the evening. In such case, the communication controller 172 may determine the order based on the time of day and on information of which external unit 104 is most likely to be communicated with at the determined time of day. Alternatively, the user may use the electronic pen 100 to communicate almost exclusively with a specific computer, and, say, every fiftieth time of communication, the electronic pen 100 communicates with a mobile phone. In such case, the communication controller 172 may determine the order based on the likelihood of the communication link information to be used, i.e. the communication controller 172 would always try to establish communication with the specific computer first.

The external unit 104 with which the electronic pen communicates may be any kind of device, which is able to process or forward data information. For instance, the external unit 104 may be a mobile phone, a personal computer, such as a desktop computer, a laptop computer, a tablet PC or a handheld PC, a LAN access point, or another electronic pen.

The electronic pen 100 may be specially set up for communicating with a few specific external units 104, which are most commonly used in transmitting information from the electronic pen 100. For instance, the electronic pen 100 may be used for transmitting information to a user's personal computer, when the user is at his office or in vicinity of the personal computer, whereas the electronic pen 100 may be used for transmitting information to a mobile phone when the user is out of office. Alternatively, the electronic pen 100 may be used for transmitting information to different personal computers, e.g. an electronic pen of a student may be used for transmitting information to a personal computer in school and to another computer at home. Further combinations of communication with specific computers, mobile phones and other devices are feasible. The electronic pen 100 may be set up for communication with the external units 104 as needed in the specific scenario of the user. By the electronic pen 100 storing communication link information for communicating with several desired specific external units 104, the electronic pen 100 may establish a communication link with the external unit 104 presently within range of the electronic pen 100, without the need for any input from the user. Hence, once the electronic pen 100 has been set up, the user need not think about which external unit 104 is within range of the electronic pen 100. This makes use of the electronic pen 100 very smooth to the user.

In one embodiment, the user may still force the electronic pen 100 to establish a communication link with a specific external unit 104. In this regard, a special portion of a position code, an action area, may be associated with a function to trigger communication with a specific external unit 104. Hence, if the user points the electronic pen 100 to a certain action area, the control unit 170 may interpret the read position code as a request to establish a communication link with a specific external unit 104, such as the personal computer or the mobile phone of the user.

Further, another action area may be interpreted by the control unit 170 as a request to establish a connection with any of the external units 104 for which communication link information is stored in the electronic pen 100. Hence, the electronic pen 100 may thus be returned to a mode, where the electronic pen 100 automatically selects an order of trying to establish a communication link with specific external units and establishing communication with the first external unit within range of the electronic pen 100 without any user interaction.

In one embodiment, the communication link information may be associated with a class of external units. The electronic pen 100 may be arranged to merely store information for one specific external unit 104 within a class of external units at the same time. Hence, the electronic pen 100 may store communication link information associated with one specific mobile phone and one specific personal computer. This is suitable where the user of the electronic pen 100 mostly uses the electronic pen 100 with a specific mobile phone and a specific personal computer.

In this embodiment, the electronic pen 100 may be arranged to replace the communication link information regarding a specific external unit 104, when communication link information for another external unit 104 within the same class of external units is gathered. This implies that the user may retain control of which external units 104 the electronic pen 100 is set up to communicate with. Further, removing outdated communication link information from the electronic pen 100 may require access to a user interface by e.g. connecting the electronic pen 100 to a personal computer via a cradle. Hence, the removing of communication link information may be cumbersome. By replacing the communication link information regarding a specific external unit within a class of external units, there is no need to remove the outdated communication link information.

The electronic pen 100 may be arranged to record information in different modes. The position code read by the electronic pen 100 may control which mode the electronic pen 100 acts in. Hence, if the electronic pen 100 reads a position from a specific portion of the position-coding pattern 108, the electronic pen 100 may enter a predetermined mode. For instance, the electronic pen 100 may be set up to act in a storing mode and in a streaming mode. In the storing mode, the electronic pen 100 may store the recorded information in an internal memory 180 and only output the information to an external unit 104 when explicitly requested to output information by the user. In the streaming mode, the electronic pen 100 may be arranged to continuously transmit recorded information in real time to an external unit 104.

In both the storage mode and the streaming mode, the electronic pen 100 may be arranged to establish a communication link with an external unit 104 using communication link information stored in the electronic pen 100.

In one embodiment, the transceiver 152 of the electronic pen 100 is arranged to communicate in accordance with the Bluetooth protocol. The electronic pen 100 is provided with limited capabilities for providing feedback information to a user. However, when communicating in accordance with the Bluetooth protocol, a pairing to the external unit 104 to be communicated with is required. For many simple products using Bluetooth, the pairing procedure may be facilitated by providing a Bluetooth receiver which is prepared for communication with the product and is connected to the external unit, e.g. with a USB contact. However, for an electronic pen 100 that is to communicate with several different external units 104, this may not be practical or even possible. The electronic pen 100 may therefore store communication link information for external units 104 which are commonly communicated with. The electronic pen 100 may further be arranged to sequentially try to establish communication with the external units 104 for which communication link information has been provided in order to establish a communication link without the need for user interaction.

An electronic pen 100 communicating using the Bluetooth protocol and the use of the electronic pen 100 will now be further described in detail.

The electronic pen 100 may be arranged to transmit sensitive information to the external unit 104. In such case, a secure Bluetooth connection is to be established to the external unit 104. This implies that the electronic pen 100 requires authentication and encryption for communication with an external unit 104. Therefore, the electronic pen 100 needs to be paired to the external unit 104. The electronic pen 100 has a Bluetooth pin code, which needs to be entered into the external unit 104 in order to accomplish a pairing between the electronic pen 100 and the external unit 104.

First, the electronic pen 100 may be set in a Bluetooth discoverable mode. This may be accomplished by activating the electronic pen 100, e.g. by removing a cap from the pen tip 110. The electronic pen 100 may alternatively be set in the Bluetooth discoverable mode by pointing the electronic pen 100 to a specific action area or pushing a button 114 on the electronic pen 100. When the electronic pen 100 is in the Bluetooth discoverable mode, the electronic pen 100 responds to pairing requests from external units 104.

If the electronic pen 100 in the Bluetooth discoverable mode is within range of an external unit 104, the electronic pen 100 may receive a pairing request from the external unit 104. A pairing process is then initiated and, by the user entering the Bluetooth pin code of electronic pen 100 into the external unit 104, the electronic pen 100 and the external unit 104 may be paired. The electronic pen 100 may have a fixed Bluetooth pin code, which may be hard-coded in the electronic pen 100. In pairing, the electronic pen 100 and the external unit 104 create a link key, which may thereafter be used for secure communication between the electronic pen 100 and the external unit 104.

Once the pairing has been established, the electronic pen 100 and the external unit 104 may establish a secure communication link when within range of each other without any need for further user interaction.

The electronic pen 100 stores communication link information associated with the external unit 104. The communication link information may comprise a Bluetooth address of the external unit 104 and the common link key. The Bluetooth address and the common link key are used for establishing a secure connection with the external unit 104. The communication link information may further comprise a time of pairing the electronic pen 100 with the external unit and a last time of communication between the electronic pen 100 and the external unit 104.

The communication link information may further comprise information of which class of external unit 104 the communication link information is associated with. For instance, the class of external unit 104 may be a mobile phone, a computer or a network connecting point.

When the electronic pen 100 wants to establish a communication link with the external unit 104, the electronic pen 100 uses the paging procedure of the Bluetooth protocol. The electronic pen 100 then uses the Bluetooth address and the common link key in order to request a connection to the external unit 104. If the external unit 104 is within range of the electronic pen 100 and is open for communication with the electronic pen 100, a connection will be established.

In the storing mode, the electronic pen 100 may be arranged to store handwritten strokes in one or more files in the memory 180 of the electronic pen 100. The electronic pen 100 may be arranged to use the Bluetooth Object Push Profile, when transmitting the one or more files to an external unit 104.

In the streaming mode, the electronic pen 100 may be arranged to use the Bluetooth Serial Port Profile, when transmitting information to an external unit 104. Alternatively, the electronic pen 100 may be arranged to use Bluetooth HID (Human Interface Device) Profile.

The electronic pen 100 may store parameter values in the non-volatile memory. The parameter values may be used to control the function of the electronic pen 100.

The electronic pen 100 may store a capture mode parameter. The capture mode parameter may either be set to Store or Stream in order to control the electronic pen 100 to act in a storing mode or streaming mode, respectively.

Further, the electronic pen 100 may store a device selection parameter. The device selection parameter may control which external unit 104 that the electronic pen 100 is to communicate with. The device selection parameter may e.g. be set to Any, Phone, Computer, or Network.

When the device selection parameter is Phone, Computer, or Network, the communication controller 172 will always try to establish a communication link with a specific mobile phone, personal computer or network access point, respectively, in accordance with the associated communication link information.

When the device selection parameter is set to Any, the communication controller 172 will try to establish a communication link with any external unit 104 within range of the transceiver 152 in accordance with a determined order of using the communication link information.

The electronic pen 100 may also store a Bluetooth state parameter, which may indicate the status of a connection of the electronic pen 100 to an external unit 104. The Bluetooth state parameter may be set to Idle, indicating that no connection is established, Connecting, indicating that a process of establishing a communication link is currently running, or Connected, indicating that a communication link to an external unit has been established.

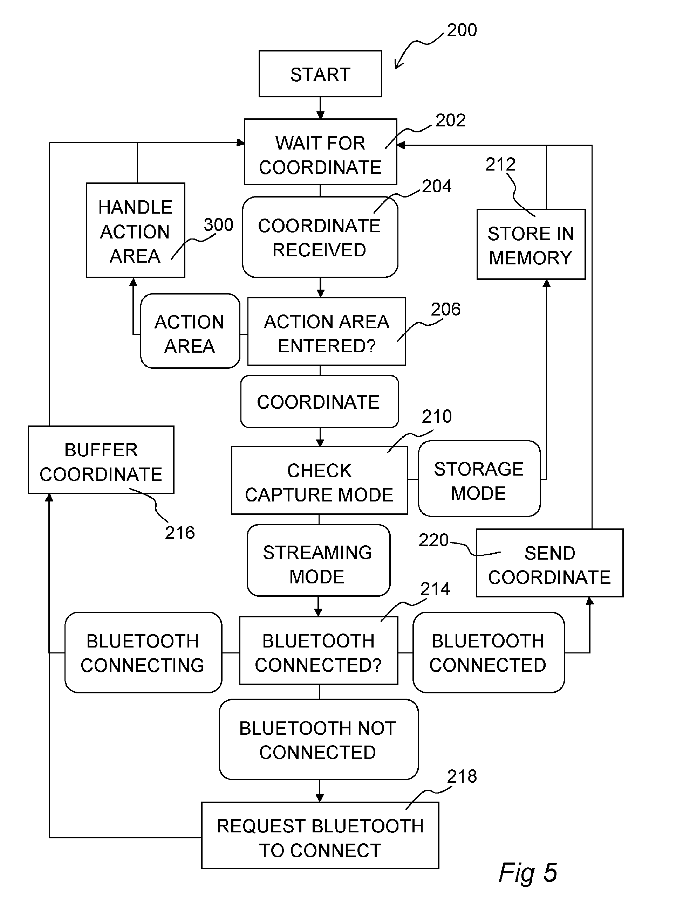

Referring now to Fig. 5, a process 200 in the electronic pen 100 when recording a position will be described. When the pen down detector 112 signals that the electronic pen 100 is applied to a substrate 102, the control unit triggers the sensing arrangement 120 to continuously gather data for recording the position of the electronic pen 100. In one embodiment, an image sensor acquires 70-100 frames per second. Each frame depicts a position code on the substrate 102. The sensing arrangement 120 decodes the position code in the frames in order to provide a sequence of 70-100 positions per second.

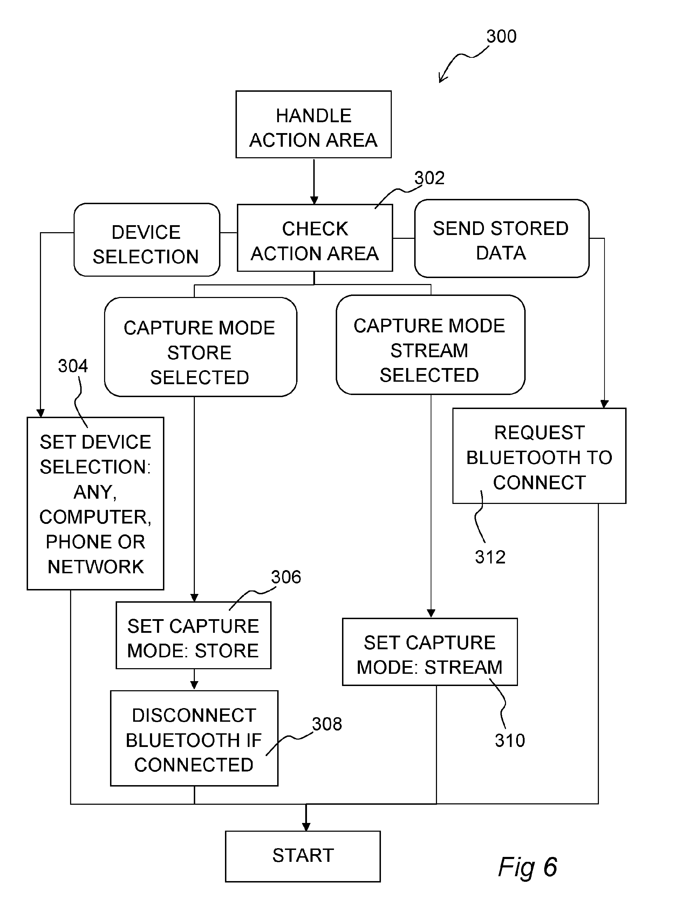

The control unit 170 runs a coordinate handling process, which is arranged to receive the sequence of positions from the sensing arrangement 120. The coordinate handling process may be initiated as soon as the electronic pen 100 is turned on or activated. The coordinate handling process starts in a waiting state, step 202, where it is listening for receipt of a decoded position from the sensing arrangement 120. When a position is received, step 204, the process checks whether the position is within an action area of the position code, step 206. This implies that the control unit 170 determines whether the recorded position is associated with a function. If the position is determined to be within an action area, the control unit starts a process 300 as further described below with reference to Fig. 6.

If step 206 instead reveals that the position is not within an action area, the control unit 170 handles the position as a location coordinate of the pen. The control unit 170 first checks the value of the capture mode parameter, step 210. If the capture mode parameter is set to Store, the coordinate is stored in a file in the memory 180 of the pen, step 212. Thereafter, the control unit 170 is returned to the waiting state 202.

If step 210 instead reveals that the capture mode parameter is set to Stream, the coordinate is to be transferred in real time to an external unit 104. The control unit 170 then checks the Bluetooth state parameter of the electronic pen 100, step 214, to determine whether the transceiver 152 is connected to an external unit 104. If the Bluetooth state parameter is set to Connecting, the coordinate cannot be instantly sent to the external unit 104. The coordinate is then temporarily stored in a buffer memory of the electronic pen 100, step 216, and the control unit is returned to the waiting state 202.

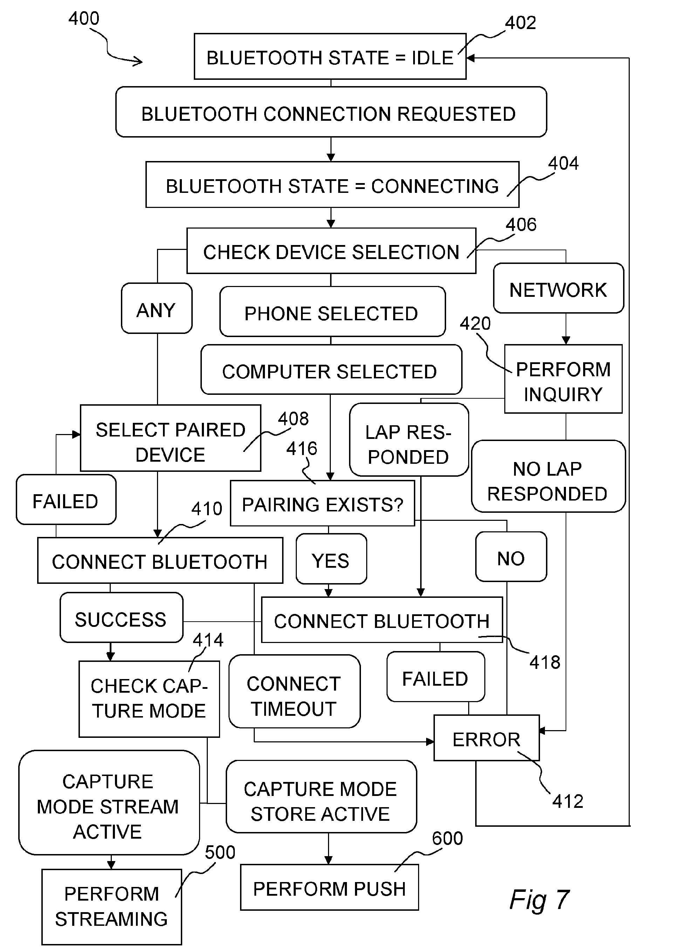

If step 214 instead reveals that the Bluetooth state parameter is set to Idle, the control unit 170 requests the transceiver 152 to connect to an external unit 104, step 218, which will be further described below with reference to Fig. 7. The coordinate is temporarily stored in a buffer memory of the electronic pen 100, step 216, and the control unit 170 is returned to the waiting state 202.

If the Bluetooth state parameter is set to Connected, the control unit 170 outputs the coordinate to the transceiver 152 for sending the coordinate, step 220, to the external unit 104, with which a communication link has been established.

Referring now to Fig. 6, a process 300 for handling a detection of a coordinate within an action area will be described. The electronic pen 100 stores a description of which coordinates are associated with action areas. The control unit 170 compares each received coordinate to this description. If the control unit 170 finds that the coordinate is within an action area, the process 300 for handling action areas is started.

The control unit 170 starts the process for handling action areas and checks the coordinate, step 302, to determine which action area that the electronic pen 100 has been applied to by the user.

The action area may correspond to a selection of a class of external unit 104 with which the transceiver 152 is to communicate. The action area may correspond to a selection of communication with a mobile phone, a personal computer or a LAN access point. This implies that when the electronic pen 100 is to transmit information to an external unit 104, the control unit will use the communication link information associated with the selected class of external unit 104. The action area may also correspond to a selection of any external unit 104. This implies that the control unit will automatically establish communication with an external unit 104 within range of the electronic pen 100 as described above. Hence, the action areas allow a user to force the electronic pen 100 to communicate with a specific external unit 104. However, the electronic pen 100 may also be arranged to establish a communication link to the external unit 104 within range of the electronic pen 100. The electronic pen 100 may be in this state by default. The user may also set the electronic pen 100 in this state such that the user does not to have to bother further which external unit 104 the electronic pen 100 is to communicate with. Hence, upon detecting a coordinate within an action area associated with a device selection, the device selection parameter of the electronic pen 100 is set to Any, Phone, Computer, or Network, respectively, step 304.

The action area may also be associated with a selection of the capture mode of the electronic pen 100. Hence, the action area may control which capture mode the electronic pen 100 is to use for coordinates to be received. If the control unit 170 in step 302 finds that a Store capture mode is selected, the control unit 170 sets the capture mode parameter of the electronic pen 100 to Store, step 306, and disconnects Bluetooth, if connected, step 308. If the control unit 170 in step 302 finds that a Stream capture mode is selected, the control unit 170 sets the capture mode parameter of the electronic pen 100 to Stream, step 310. The control unit 170 then also checks the Bluetooth state parameter and, if the Bluetooth state parameter is set to Idle, the control unit 170 requests the transceiver 152 to establish a communication link to the selected external unit 104 according to the value of the device selection parameter,

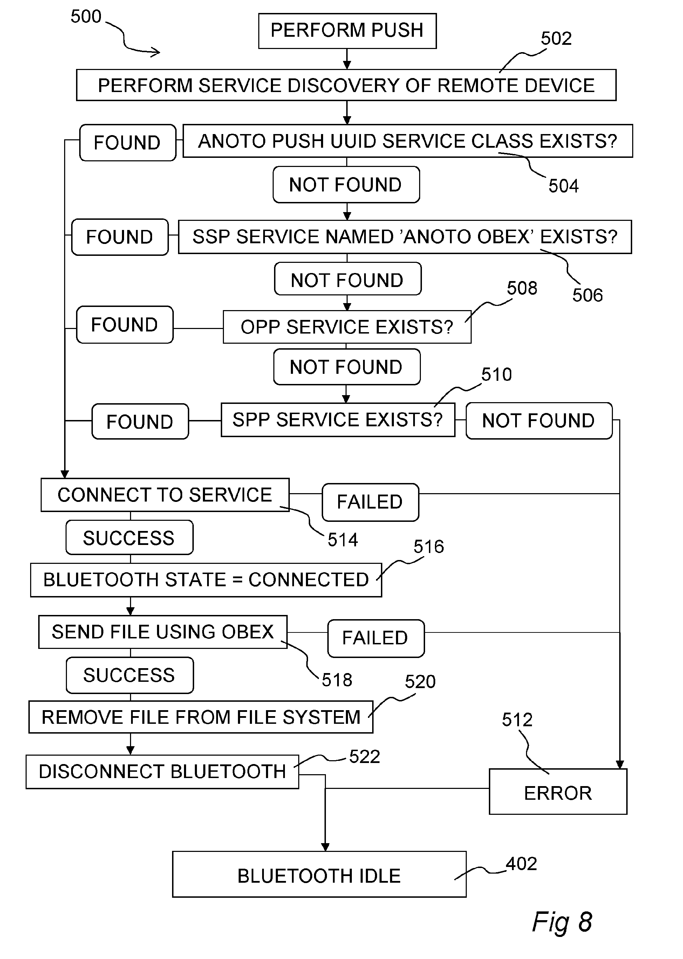

The action area may further be associated with a selection to send stored data to an external unit 104. If the control unit 170 in step 302 finds that a selection to send stored data is selected, the control unit 170 will request the transceiver 152 to establish a communication link to the selected external unit 104 according to the value of the device selection parameter, step 312, and to transmit stored data to the external unit 104 according to a process further described with reference to Fig. 8.

Referring now to Fig. 7, a process 400 in the communication controller 172 for establishing a connection to an external unit 104 will be described. The Bluetooth state parameter of the electronic pen 100 is set to Idle, step 402, when no communication with the external unit 104 occurs. When a request for a Bluetooth connection is received, the communication controller 172 is activated and first sets the Bluetooth state parameter to Connecting, step 404.

The communication controller 172 then checks which device that is selected to establish communication with according to the value of the device selection parameter, step 406. If the device selection parameter is set to Any, the communication controller 172 will establish a communication link with an external unit 104 within range of the electronic pen 100. The communication controller 172 will determine an order of using the communication link information and select first communication link information of an external unit 104 which the electronic pen 100 has been paired with, step 408. The selection of the first communication link information may be based on different criteria as described above. For instance, the communication controller 172 may check the communication link information to find the communication link information that was last used and select this communication link information. As one alternative, the selection may be based on a priority criterion.

When the communication link information has been selected, the communication controller 172 will request the transceiver 152 to establish a Bluetooth connection to the external unit 104, step 410, using the Bluetooth address and key link of the communication link information. If the transceiver 152 fails to establish a Bluetooth connection to the external unit 104, the process returns to the selection of communication link information in step 408. The communication controller 172 now selects the next communication link information in the determined order. Again, the communication controller 172 will request the transceiver 152 to establish a Bluetooth connection to the external unit 104.

If the transceiver 152 is not able to establish a connection with any device according to the stored communication link information, a connect time-out may occur. This implies that there is an error 412 in establishing a Bluetooth connection. The user may be informed of this error 412 through the feedback means. The process may be set up such that the communication controller 172 will request establishing a Bluetooth connection in step 410 to every external unit 104 for which the electronic pen 100 stores communication link information. For instance, if the electronic pen 100 stores communication link information associated with three different external units, the communication controller 172 will attempt to establish a connection with each of the three different external units in sequential order and it would typically take a few seconds before a connect time-out occurs and the user will be informed of the error 412. If an error 412 occurs, the communication controller 172 sets the Bluetooth state parameter to Idle, step 402, and waits for a new request to establish a Bluetooth connection.

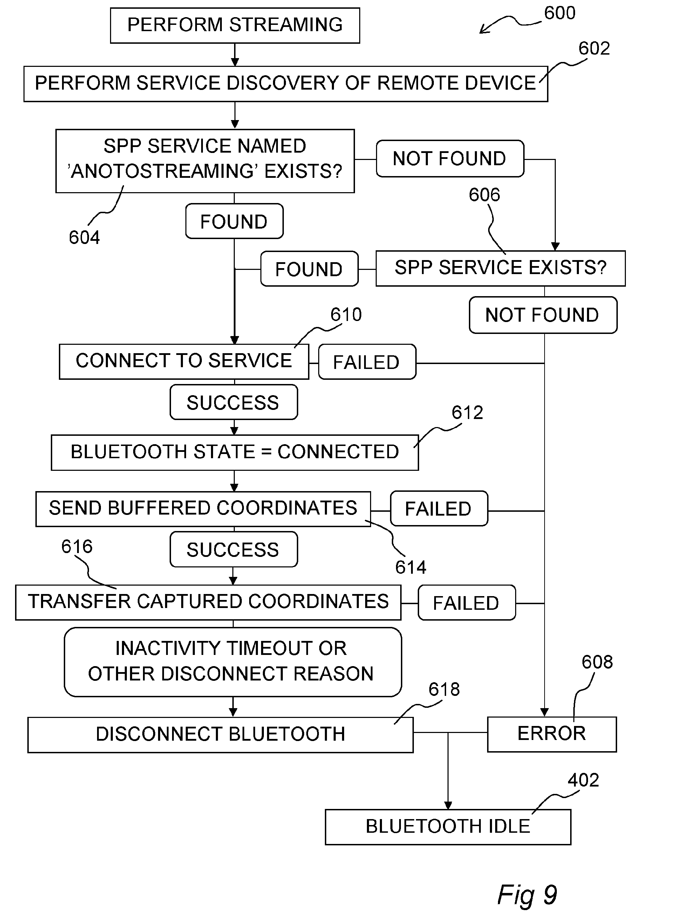

If the transceiver 152 is able to establish a communication link with an external unit 104, the electronic pen 100 is prepared to communicate with the external unit 104 and the Bluetooth state parameter is set to Connected. The communication controller 172 then checks the capture mode, step 414. If the capture mode parameter is set to Stream, the communication controller 172 will start a process 500 to transmit coordinates in real time to the external unit 104, as further described with reference to Fig. 8. If step 414 instead reveals that the capture mode parameter is set to Store, the communication controller 172 will start a process 600 to transmit one or more files comprising information of pen strokes to the external unit 104, as further described with reference to Fig. 9.

If the communication controller 172 in step 406 finds that the device selection parameter is set to Phone or Computer, the communication controller 172 will try to establish a communication link with a specific mobile phone or personal computer, respectively. The communication controller 172 first checks whether the electronic pen 100 has been paired with an external unit 104 and the communication link information has been stored with a class of external unit 104 set to Phone or Computer, respectively, step 416. If no such pairing exists, the electronic pen 100 is not set up to communicate with an external unit 104 as requested, and an error 412 occurs, as described above.

If step 416 reveals that the electronic pen 100 is paired with a desired external unit 104, the communication controller 172 will request the transceiver 152 to establish a Bluetooth connection, step 418, using the communication link information associated with the class of external unit 104. If the transceiver 152 fails to establish a Bluetooth connection, an error 412 occurs, as described above. If the transceiver 152 is able to establish a Bluetooth connection, the electronic pen 100 is prepared to communicate with the external unit 104 and the communication controller 172 proceeds to step 414 as described above.

If the communication controller 172 in step 406 finds that the device selection parameter is set to Network, the communication controller 172 will try to establish a communication link to a LAN access point. The electronic pen 100 may be prepared for communication with LAN access points in a network where the electronic pen 100 is known. The electronic pen 100 does not store pairing information in memory. Instead, a pairing with the LAN access point is to be made. However, the network may be set up to know the electronic pen 100 such that the pairing may be performed without the need for any user interaction.

The communication controller 172 first requests the transceiver 152 to send a connection inquiry, step 420. The electronic pen 100 then listens to responses to the inquiry. If no LAN access point responds to the inquiry within an inquiry timeout, which may typically be 4 seconds, an error 412 occurs as described above. However, when a LAN access point has responded, the inquiry is stopped and the communication controller 172 proceeds to step 418 and will request the transceiver 152 to connect to this access point. If an access point responds but reports that it is full and cannot provide any service, the inquiry continues looking for another available access point.

If the chosen access point is not the same LAN access point as the last LAN access point used, the electronic pen 100 will require pairing to be performed. In this regard, the LAN access point knows the Bluetooth pin code of the electronic pen 100 and the pairing procedure may take place without user interaction. This implies that it may be possible to connect to a LAN access point within a network where the electronic pen 100 is known, without need for any user interaction.

For instance, all electronic pens 100 of employees may be known in a company's network. This implies that an administrator of the network may provide the LAN access points with information of all the Bluetooth pin codes of the electronic pens of the employees, or a common Bluetooth pin code used by all the electronic pens. Hence, the electronic pen 100 may connect to a LAN access point within the company without any user interaction.

According to one embodiment, a LAN access point may be set up to always use a specific Bluetooth pin code when performing a pairing procedure with an electronic pen 100. Hence, if the Bluetooth pin code of the electronic pen 100 does not correspond to the specific Bluetooth pin code used by the LAN access point, the electronic pen 100 may not be paired to the LAN access point.

This may be suitably used in an environment, wherein the electronic pen 100 may be within range of several LAN access points of different networks and it is desired that the electronic pen 100 accesses a specific LAN access point among the several LAN access points. For instance, a school building may be provided with a separate LAN access point and separate associated network in every class room and it may be desired that the students in a class room all access the same LAN access point and network. This would, for instance, allow a teacher to see all the notes made by the students in the class room.

In order to allow a student to access the LAN access point when switching class rooms, the Bluetooth pin code of the electronic pen 100 may need to be changed. In this regard, a specific position code within an action area may be interpreted by the electronic pen 100 as a request to change the Bluetooth pin code. Hence, such a position code may be provided at the entrance to the class room such that every student entering the class room may tick the action area with his electronic pen 100 and thereby set the Bluetooth pin code of the electronic pen 100 to correspond to the code used by the LAN access point in the class room.

When a LAN access point has responded, the electronic pen 100 will try to establish a pairing and a Bluetooth connection to the LAN access point. If the connection fails, an error 412 occurs as described above. If the transceiver 152 is able to establish a Bluetooth connection, the electronic pen 100 is prepared to communicate with the external unit 104 and the communication controller 172 proceeds to step 414 as described above.

Referring now to Fig. 8, a process 500 for pushing a file comprising information recorded by the electronic pen 100 from the electronic pen 100 to an external unit 104 will be described. The first time the electronic pen 100 sends a file to the external unit 104, the communication controller 172 will perform a service discovery of the external unit 104, step 502. In this regard, the transceiver 152 will exchange information with the external unit 104 to establish what kind of Bluetooth profile is supported by the external unit 104. The communication controller 172 may first check, step 504, whether Anoto push UUID (Universally Unique IDentifier) service class exists, which is a proprietary Bluetooth service that may be installed on the external unit 104 and is especially adapted to handling electronic pen files. If this service is not found, the communication controller 172 may check, step 506, whether an SPP (Serial Port Profile) service named Anoto OBEX (OBject EXchange) exists, which is another proprietary Bluetooth service adapted to handling electronic pen files. If this service is not found, the communication controller 172 may check, step 508, whether an OPP (Object Push Profile) service exists. Finally, if an OPP service does not exist, the communication controller 172 may check, step 510, whether any SPP service exists. If none of the services exists on the external unit 104, the electronic pen 100 will not be able to communicate with the external unit 104 and an error 512 occurs. The communication controller 172 will inform the user of the error 512 through the feedback means and the communication controller 172 sets the Bluetooth state parameter to Idle and returns to process 400.

If any of the services is found in steps 504-510, the communication controller 172 will try to connect to the service first found, step 514. If the connection to the service fails an error 512 occurs as described above. If the connection to the service is successful, a communication with the external unit 104 has been established. Once the service supported by the external unit 104 has been established, the information of the supported service is stored in the communication link information and may be used in subsequent sending of files from the electronic pen 104 to the external unit 104.

The communication controller 172 then sets the Bluetooth state parameter of the electronic pen 100 to Connected, step 516. The communication controller 172 will then request the transceiver 152 to send the file to the external unit 104 using OBEX, step 518. If this fails an error 512 occurs as described above. The user would then again need to point to an action area for triggering sending the stored data, in order for the data to be sent from the electronic pen 100.

If the file is successfully transmitted to the external unit 104 in step 518, the communication controller 172 removes the file from the file system in the memory 180 of the electronic pen 100, step 520. Then, the Bluetooth connection is terminated, step 522, the Bluetooth state parameter is set to Idle and the communication controller 172 returns to process 400.

Referring now to Fig. 9, a process 600 for sending information in real time to an external unit 104 will be described. The communication controller 172 will first perform a service discovery of the external unit 104, step 602. In this regard, the transceiver 152 will exchange information with the external unit 104 to establish what kind of Bluetooth profile is supported by the external unit 104. The communication controller 172 may first check, step 604, whether an SPP service named ANOTOSTREAMING exists, which is a proprietary Bluetooth service which may be installed on the external unit 104 and which is especially adapted to handling information from an electronic pen 104. If this service is not found, the communication controller 172 may check, step 606, whether any SPP service exists. If no SPP service exists, the electronic pen 100 may determine that it will not be able to communicate with the external unit 104 and an error 608 occurs. The communication controller 172 will inform the user of the error 608 through the feedback means and the communication controller 172 sets the Bluetooth state parameter to Idle and returns to process 400. However, instead of using a SPP service, the electronic pen 100 may alternatively use the Bluetooth HID profile.

If any of the services is found in step 604-606, the communication controller 172 will try to connect to the service first found, step 610. If this fails an error 608 occurs as described above. If the connection to the service is successful, a communication with the external unit 104 has been established. Once the service supported by the external unit 104 has been established, the information of the supported service is stored in the communication link information and may be used in subsequent sending of information in real time from the electronic pen 104 to the external unit 104.

The communication controller 172 then sets the Bluetooth state parameter of the electronic pen 100 to Connected, step 612. The communication controller 172 will then output the buffered coordinates to the external unit 104, step 614. The buffered coordinates are coordinates captured by the electronic pen 100 during the time of establishing a communication link between the electronic pen 100 and the external unit 104. The buffered coordinates are temporarily stored in a memory of the electronic pen 100 until the connection is established.

If the sending of the buffered coordinates in step 614 fails, an error 608 occurs as described above. If the buffered coordinates are successfully sent to the external unit 104, the electronic pen 100 is now ready to continuously transmit coordinates to the external unit 104 as soon as the coordinates are recorded by the electronic pen 100. Hence, the transceiver 152 transfers captured coordinates to the external unit 104 in real time, step 616.

The control unit 170 may create information to be transferred from the electronic pen 100 according to a predetermined format. This format may include three different messages:
NewSession (timestamp, pen identifier)
NewPosition (timestamp, page address, position, force value)
PenUp (timestamp)

The NewSession message is generated by the control unit 170 upon detecting that the communication link has been successfully established. The NewSession message is the first message sent from the electronic pen to the external unit.

When the pen tip 110 of the electronic pen 100 is applied to the substrate 102, the electronic pen 100 will record positions. The control unit 170 will generate NewPosition messages, which each may include a time stamp, indicating a time of capturing the position information by the sensing arrangement 120, position information in the form of a page address and a position on the page, and a force value generated by the pen down detector 112. The NewPosition message may also include further information, such as an angle of the electronic pen 100 in relation to the substrate 102. Whenever the pen is moved out of contact with the substrate 102, as detected by the pen down detector 112, a PenUp message will be generated.

If a transfer of a captured coordinate in step 616 fails, an error 608 occurs as described above. Unless an error 608 occurs, the electronic pen 100 will continue to transfer captured coordinates to the external unit 104 until an inactivity timeout occurs or an explicit request to disconnect from the external unit 104 is received. The inactivity timeout may occur by no coordinates being captured by the electronic pen 100 for a predetermined period of time, such as 5-10 minutes. A request to disconnect from the external unit 104 may be created e.g. by the user placing a cap on the tip of the electronic pen 100 to turn off the electronic pen 100, by placing the electronic pen 100 in a cradle for wired connection to an external unit 104, or by pointing the electronic pen 100 to an action area selecting a Store capture mode. The communication controller 172 will then disconnect Bluetooth, step 618, set the Bluetooth state parameter to Idle and return to process 400.

The invention has mainly been described above with reference to a few embodiments. However, as is readily appreciated by a person skilled in the art, other embodiments than the ones disclosed above are equally possible within the scope and spirit of the invention, which is defined and limited only by the appended patent claims.

## Claims

1. An electronic pen, comprising:
a sensing arrangement (120) for recording a position of the electronic pen (100) in relation to a substrate;
a transceiver (152) for short-range point-to-point communication with external units;
a memory (182), having
at least a first memory area (184A) for storing first communication link information for communication with a first external unit and a second memory area (184B) for storing second communication link information for communication with a second external unit;
wherein said first and second communication link information comprises information necessary for establishing a short-range point-to-point communication link between the electronic pen (100) and a specific first and a specific second external unit, respectively; and
a controller (172) for controlling transmission of information from the electronic pen (100), said controller (172) being arranged to determine an order of using the first and second communication link information and to request establishing communication with an external unit in range of said transceiver (152) using the first and second communication link information in the determined order.

2. The electronic pen according to claim 1, wherein said first and second communication link information comprise information of a last time of a connection between the electronic pen (100) and the first and second external unit, respectively, and wherein the controller (172) is arranged to determine the order of using the first and second communication link information based on said information of the last time of connection.

3. The electronic pen according to claim 1 or 2, wherein the first and second communication link information comprises key information specific to the first and second external unit, respectively, and wherein the controller (172) is arranged to request establishing secure communication using the key information.

4. The electronic pen according to any one of claims 1-3, wherein the first and second communication link information comprises a Bluetooth address and Bluetooth link key information of the first and second external unit, respectively, and the controller (172) is arranged to request establishing Bluetooth communication.

5. The electronic pen according to any one of claims 1-4, wherein the memory (182) is arranged to simultaneously store communication link information for only one specific external unit within a class of external units, wherein the first and second memory area (184A, 184B) are arranged to store communication link information for different classes of external units.

6. The electronic pen according to any one of claims 1-5, wherein the controller (172) is arranged to wait for a time-out of communication not being established and, after detecting a time-out, requesting establishing communication with an external unit in range of said transceiver (152) using next communication link information in the determined order.

7. The electronic pen according to any one of claims 1-6, wherein the memory (182) comprises a third memory area for storing third communication link information for communication with a third external unit, said communication link information comprises information necessary for inquiring a short-range point-to-point communication link between the electronic pen (100) and an external unit providing a LAN access point.

8. A method in an electronic pen (100), said method comprising:
receiving a request to transmit information from the electronic pen (100) to an external unit,
determine an order of using a first communication link information for short-range point-to-point communication and a second communication link information for short-range point-to-point communication among information of at least two communication links stored in the electronic pen (100), wherein said first and second communication link information comprises information necessary for establishing a short-range point-to-point communication link between the electronic pen (100) and a specific first and second external unit, respectively;
retrieving said first communication link information for short-range point-to-point communication from a first memory area (184A) of the electronic pen (100) according to the determined order,
requesting establishment of a short-range point-to-point communication link with the first external unit using the first communication link information;
detecting a failure of establishing a short-range point-to-point communication link with the first external unit;
retrieving a second communication link information for short-range point-to-point communication from a second memory area (184B) of the electronic pen (100) according to the determined order; and
requesting establishment of a short-range point-to-point communication link with the second external unit using the second communication link information.
